# EUROPEAN PATENT SPECIFICATION

(11) **EP 2 130 277 B1**
(45) Date of publication and mention of the grant of the patent: **19.06.2013**
(21) Application number: 08734293.7
(22) Date of filing: 21.03.2008
(51) Int. Cl.: H02H 9/08

(54) **CIRCUIT AND METHOD FOR COMPENSATING CAPACITIVE EARTH CURRENTS IN NETWORKS**
SCHALTUNG UND VERFAHREN ZUR KOMPENSATION KAPAZITIVER ERDSTRÖME IN NETZEN
CIRCUIT ET PROCÉDÉ DE COMPENSATION DE COURANTS À LA TERRE CAPACITIFS DANS DES RÉSEAUX

(30) Priority: 26.03.2007 CZ 20070225
(43) Date of publication of application: 09.12.2009
(73) Proprietor: EGE, Spol. sr.o., 370 08 Ceské Budejovice (CZ)
(72) Inventor: ZÁK, Frantisek, 373 67 Borek, Ceské Budejovice (CZ)
(74) Representative: Sedlák, Jirí
(86) International application number: PCT/CZ2008/000034
(87) International publication number: WO 2008/116428

(56) References cited:
- DE-A1- 2 017 867
- GB-A- 525 334

## Description

### Background and summary of the invention

The invention consists in switching a resistance of optimum value to the secondary winding of an arc-suppression reactor during earth faults. The optimum value of the resistance is based on the variation of electric network parameters, taking into consideration also the set conditions.

This switching method allows a suitable choice of serial or parallel sequencing of resistor sections and eliminates short circuits due to wrong switching or failure of switching elements.

In networks provided with compensation of capacitive earth currents, resistance is during an earth-fault momentarily switched to the secondary winding of one to the network neutral connected arc-suppression reactor. In such way a short-time rise of the earth-fault watt fault current happens, which positively affects the reliability of earth-fault protections. The magnitude of the watt fault current depends on the value of the connected resistance. With lower values of this resistance the watt fault current component becomes very significant. This current brings a decrease of the network zero voltage component also due to the voltage drop across the failure point resistance. Nevertheless, the value of the zero voltage component is the crucial criterion identifying the occurrence of a network earth fault. In case of earth faults with considerable failure point resistance the connection of the resistor provokes a fall of the zero voltage component below a threshold value defining an earth fault, which results in locking-out the earth protection function. Consequently the connection of very low resistance values to the secondary winding of an arc-suppression reactor limits the capability of earth protections to detect earth faults with considerable failure point resistance. On the other hand, connection of high resistance values to secondary winding of an arc-suppression reactor does not allow improvement of the earth protections reliability due to the only slight rise of the failure current. For the right choice of secondary resistance the network parameters are an important consideration. With great variation of network parameters often an adaptation of the connected secondary resistance is imperative. With respect to the requirements for detection of high resistance earth faults and earth fault protection settings, the determination of the optimum value of the secondary resistance is regarded as a key problem.

Document GB 525 334 A discloses a circuit for compensating capacitive earth currents networks with an arc-suppression reactor, connectable between the network neutral and the ground, as well as a resistance, connected to the secondary winding of the arc-suppression reactor by a switch. This device cannot provide an automatic earth-fault resistance evaluation as well as following resistance operation and setting. A required value of resistance can be obtained only by change of tap on the primary side of the reactor.

The purpose of the invention is to get within networks with earth capacitive current compensation an optimum rise of the fault current watt component during an earth fault, which does not allow the zero voltage component to fall below a set value and does not negatively affect the function of earth fault protections.

This goal can be reached through automatic selection of the resistance connected to the secondary winding of an arc-suppression reactor with respect to current network conditions during an earth fault and the applied earth protection variant as well.

During earth-fault a predetermined resistance value is momentarily connected to the arc-suppression reactor secondary winding. As a result of the rise of the fault current at the earth fault point we obtain within the network a zero voltage component and phase to earth voltages change too. On the basis of voltage variations caused by the change of the zero current component in consequence of the resistance connection, the value of earth fault point resistance can be determined. The determination of earth fault point resistance is affected also by other factors as the arc-suppression reactor tuning accuracy, network watt current component etc. Moreover the earth-fault resistance tends to be current-dependant. On the basis of available readings, such as zero voltage component and the connected resistance value, only an estimation of the earth-fault resistance can be done. In accordance with this estimation an optimum value of the resistance is determined, subsequently connected to the secondary winding of an arc-suppression reactor for given period.

The determination of the optimum secondary resistance is based on several aspects. One of them is the type of the used network earth protections. When using earth fault protections based on the monitoring of the zero power component, the best way of choosing value of the connected resistance is to ensure, that the network zero voltage component shows after the connection just 50% of the phase to earth voltage. With this voltage value, the faulted feeder is supplied with maximum power of the voltage and current component. When using vector protections, the connected resistance should be selected with respect to the highest rise of the fault current and the principle, that the value of the zero voltage component exceeds the limit for earth fault detection, corresponding to the earth fault protection setting. According to the calculation and with respect to the above mentioned aspects, the optimum value of the connected resistance can be fixed. The resistance value is to be adjusted through serial-parallel sequencing of individual resistor sections. An important advantage consists in the possibility of using feedback signal about the operation of protections, sent to the switching resistor controller. In case of unsuccessful evaluation of an earth- fault feeder, a restart of switching after parameter setting is possible. In the next step the original evaluation of the fault resistance can be made more accurate and the conditions for the earth protection operation are better. With first successful operation of one of all earth protections, further resistor switching is stopped.

### Brief description of the Drawings

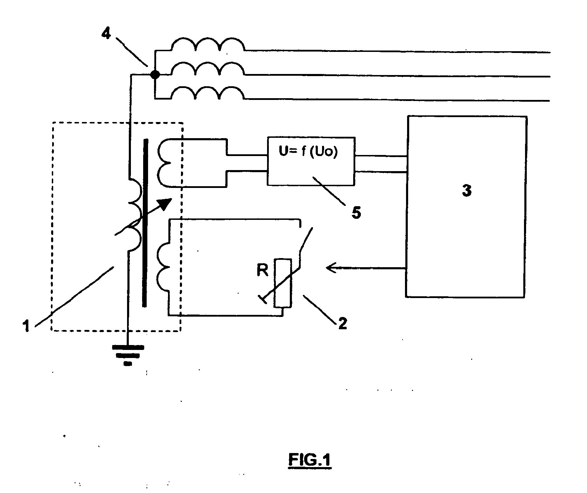

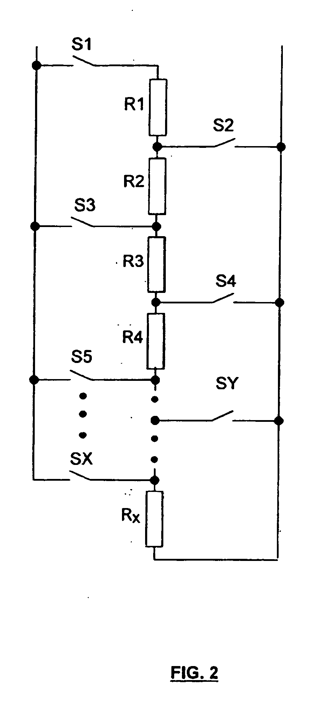

Technical approach is illustrated by enclosed figures. Figure 1 shows an example of a resistor with variable resistance value connected to the secondary winding of an arc-suppression reactor, wired between network neutral and the earth potential point. The figure illustrates also measurement of network neutral voltage on the measuring winding of the corresponding controller. Figure 2 shows general wiring of resistances without any resistor step restrictions. With three resistor elements we get five real resistance sequencing combinations. With five resistor elements up to twenty real resistance sequencing combinations are possible. Figure 3 shows an example of variable resistance represented by a step resistor with five resistor elements R1 to R5 and relevant system of 5 switching devices S1 to S5. This wiring offers different combinations of resistor elements from full parallel connection with minimum resistance value with switched on devices S1 to S5 even to the serial resistor sequencing, giving the maximum resistance with only device S1 closed.

### Detailed description of the preferred embodiments

A device for connection of variable resistance can be realized as a stepped resistor with relevant system of switching devices offering different combination of resistor elements, going from parallel connection with minimum resistance value even to serial resistor sequencing, giving the maximum resistance value. These switching devices are operated by means of a controller fitted with the measurement of zero voltage component as well as zero component of current, passing through the resistor.

With an earth-fault inception the controller with set time operating delay switches momentarily all resistor series-connected elements to the secondary winding of the arc-suppression reactor (maximum connected resistance value). The connection of maximum resistance into the secondary winding during an earth-fault generates a zero voltage component variation. Due to this variation the controller evaluates the value of the earth-fault resistance and determines its corresponding optimum value. This resistance is subsequently connected for a set time into the secondary winding of the arc-suppression reactor. After this switching step the controller evaluates on the basis of voltage and current variations the earth-fault resistance again, making this choice more accurate, for the event of necessary switching repetition due to unsuccessful earth protection operation. So the earth-fault resistance becomes stepwise more and more accurate, because under real conditions the resistance is current-dependent.

If the controller evaluates a low earth-fault resistance value, a command switches on a small resistance, producing a rise of watt earth fault current component even by tens of amperes. In case of low-resistance earth-faults and sensitive feeder earth-fault protections, setting a current limit is possible. It is the maximum value of the watt current, passing through the earth fault point after the resistance has been switched in.

If the controller evaluates a considerable earth fault resistance, the controller sets a combination of switching devices, achieving with the connected resistance the maximum rise of the watt earth-fault component, ensuring at the same time, that the network zero voltage does not fall below a preset limit. This zero voltage limit may be higher or of equal value as the setting of earth protections, installed within the network for earth fault evaluation.

The device is intended for short-time rise of the watt earth-fault current component within networks with capacitive current compensation. Its application contributes to better reliability of earth protections and allows earth faulted feeder detection even for considerable resistance values of a single-phase failure. The improvement of earth protection reliability is ensured even in case of great parameter variations of the protected network.

### Overview of the positions used in the drawings

| | |
|---|---|
| 1 | Arc-suppression reactor (without/with variable inductance) |
| 2 | Variable resistance (resistor with step sequencing of resistances) |
| 3 | Automatic earth fault resistance evaluation and resistor operation unit |
| 4 | Network neutral (transformer neutral) |
| 5 | Block for automatic evaluation of network zero voltage component Uo |

## Claims

1. Circuit for compensating capacitive earth currents in networks with an arc-suppression reactor (1), connectable between the network neutral (4) and the ground, with a resistance (2), connected to the secondary winding of the arc-suppression reactor (1) by a switch (9), **characterized in that** the resistance (2) is interconnected with a unit (3), providing automatic earth-fault resistance evaluation as well as resistor operation and setting, and the input of this unit (3) is connected with a block (5) for network zero voltage component evaluation.

2. Method of compensation of capacitive earth currents networks comprising the steps of momentarily connecting a predetermined resistance (2) to the secondary winding of the arc-suppression reactor (1) during an earth fault, determining zero voltage variations, caused by the change of zero current, estimating the value of the earth-fault resistance and determining from this a new resistance (2) value to be connected to the secondary winding of the reactor (1), and connecting the newly determined resistance (2) to the secondary winding of the reactor (1).

## Patentansprüche

1. Schaltkreis zum Kompensieren kapazitiver Erdströme in Netzwerken mit einem E-Spulenreaktor (1), der zwischen dem Netzwerk neutral (4) und dem Boden angeschlossen werden kann, mit einem Widerstand (2), der an die sekundäre Windung des E-Spulenreaktors (1) durch einen Schalter (9) angeschlossen ist, **dadurch gekennzeichnet, dass** der Widerstand (2) mit einer Einheit (3) zwischengeschaltet ist und so automatisch die Evaluation des Erdfehler-Widerstands wie auch den Betrieb und die Einstellung des Widerstands bereitstellt, und der Anschluss dieser Einheit (3) ist mit einem Block (5) für die Evaluation der Nullspannungskomponente verbunden.

2. Methode zum Kompensieren kapazitiver Erdstrom-Netzwerke, welche die Schritte eines vorübergehenden Anschlusses eines vorher festgelegten Widerstands (2) an die sekundäre Windung des E-Spulenreaktors (1) während eines Erdfehlers sowie die Bestimmung von Nullspannungsvariationen, die durch den Wechsel der Nullspannung entstehen, wie auch die Bestimmung des Werts des Erdfehler-Widerstands und die Neubestimmung dieses Widerstands von einem neuen Widerstandswert (2) umfassen, welcher an die sekundäre Spule des Reaktors (1) angeschlossen werden soll, darunter auch den Anschluss des neu bestimmten Widerstands (2) an die sekundäre Spule des Reaktors (1).

## Revendications

1. Circuit pour compenser les courants de capacité à la terre des réseaux avec une bobine d'extinction (1), pouvant être connectée entre le neutre (4) et la terre du réseau, une résistance (2) connectée à l'enroulement secondaire de la bobine d'extinction (1) par un commutateur (9), **caractérisé en ce que** cette résistance (2) est reliée à une unité (3), offrant une évaluation automatique de la résistance de défaut de mise à la terre ainsi que le fonctionnement et le réglage de la résistance, et l'entrée de cette unité (3) est connectée à un bloc (5) pour l'évaluation du passage à zéro de la tension des composants du réseau.

2. Méthode de compensation des réseaux des courants de capacité à la terre, comprenant les étapes consistant à connecter momentanément une résistance prédéfinie (2) à l'enroulement secondaire de la bobine d'extinction (1) au cours d'un défaut de mise à la terre, à déterminer les variations de tension au passage à zéro provoquées par le changement du courant nul, à estimer la valeur de la résistance de défaut à la terre et à déterminer à partir de cela une nouvelle valeur de résistance (2) pour être connectée à l'enroulement secondaire de la bobine (1), puis à connecter la résistance nouvellement définie (2) à l'enroulement secondaire de la bobine d'extinction (1).
